Europäisches Patentamt

European Patent Office

Office européen des brevets

(19)

(11) **EP 1 257 964 B1**

(12) **FASCICULE DE BREVET EUROPEEN**

(45) Date de publication et mention
de la délivrance du brevet:
**13.10.2004 Bulletin 2004/42**

(21) Numéro de dépôt: **01909883.9**

(22) Date de dépôt: **23.02.2001**

(51) Int Cl.⁷: $G06K\ 7/00$

(86) Numéro de dépôt international:
**PCT/FR2001/000533**

(87) Numéro de publication internationale:
**WO 2001/065467 (07.09.2001 Gazette 2001/36)**

(54) **PROCEDE DE LECTURE D'ETIQUETTES ELECTRONIQUES PAR IDENTIFICATION SIMULTANEE DE LEUR CODE**

**VERFAHREN ZUM LESEN VON ELEKTRONISCHEN ETIKETTEN MITTELS GLEICHZEITIGER IDENTIFIZIERUNG IHRES KODES**

**ELECTRONIC LABEL READING WITH SIMULTANEOUS IDENTIFICATION OF THEIR CODE**

(84) Etats contractants désignés:
**DE GB IT**

(30) Priorité: **25.02.2000 FR 0002394**

(43) Date de publication de la demande:
**20.11.2002 Bulletin 2002/47**

(73) Titulaire: **COMMISSARIAT A L'ENERGIE ATOMIQUE**
**75752 Paris Cédex 15 (FR)**

(72) Inventeurs:
• **VACHERAND, François**
**F-38800 Le Pont de Claix (FR)**
• **CROCHON, Elisabeth**
**F-38320 Poisat (FR)**

(74) Mandataire: **Simonnet, Christine et al**
**c/o Brevatome,**
**3, rue du Docteur Lancereaux**
**75008 Paris (FR)**

(56) Documents cités:
**EP-A- 0 942 385** **EP-A- 0 942 386**

**Description**

Domaine de l'invention

L'invention concerne un procédé d'identification simultanée des codes d'identification d'étiquettes électroniques situées dans le champ électromagnétique d'un dispositif interrogateur. L'invention concerne également un système destiné à mettre en oeuvre ce procédé.

L'invention s'applique, de manière générale, à toute transaction entre un système interrogateur et des systèmes répondeurs (appelés plus simplement « étiquettes »), dont on ne connaît, a priori, ni le nombre, ni les codes d'identification. En particulier, l'invention trouve des applications dans le domaine de la reconnaissance d'individus porteurs de badges, ou de surveillance médicale d'individus porteurs d'implants, ou dans le domaine de la comptabilisation et du contrôle d'objets porteurs d'étiquettes, tel que des bagages dans un aéroport, ou des produits dans une chaîne de production ou encore pour la gestion des stocks de marchandises. L'invention peut s'appliquer, plus particulièrement, à l'inventaire continu du contenu d'un caddie de supermarché, dans lequel l'acheteur peut déposer ou retirer, à tout moment, un ou plusieurs produits.

Etat de la technique

De nombreux systèmes et procédés d'identification d'objets porteurs d'étiquettes sont actuellement connus de l'homme de l'art. La plupart d'entre eux s'appliquent à une lecture multiple d'étiquettes, appelée « lecture multiétiquette ».

La plupart de ces procédés de lecture multiétiquette propose une réémission du code de l'étiquette, après un temps aléatoire propre à chaque étiquette, lorsqu'il y a détection de collision de messages émis simultanément par les étiquettes.

D'autres procédés consistent à laisser une tranche de temps particulière pour la réponse d'une étiquette. Chaque tranche de temps est déterminée de manière univoque par le code d'identification de chaque étiquette. Toutefois, ces procédés n'optimisent pas le temps de transaction entre le système interrogateur et l'ensemble des étiquettes. De plus, le temps mis par un tel procédé pour lire la totalité des étiquettes peut ne pas être déterministe, puisqu'il peut être basé sur des tirages de nombres aléatoires, en supplément de l'aléa du nombre d'étiquettes présentes.

Il existe, par ailleurs, des procédés qui proposent une lecture systématique et déterministe des codes d'identification des étiquettes. L'un de ces procédés est décrit notamment dans la demande de brevet FR-A-2 677 135. Cette demande de brevet explique comment les étiquettes, présentes dans le champ d'interrogation du dispositif interrogateur, sont amenées, par le dispositif interrogateur, à fournir successivement chaque bit de leur code d'identification, jusqu'à ce que celui-ci soit entièrement identifié. Pour cela, les étiquettes répondent à un signal de commande du dispositif interrogateur : lorsqu'une étiquette détecte que le code en cours d'identification est différent du sien, elle s'inhibe momentanément, c'est-à-dire qu'elle devient muette, de sorte que le cycle d'identification continu avec les autres étiquettes, jusqu'à ce qu'il ne reste plus qu'une seule étiquette non inhibée. Le code de cette étiquette est alors identifié. En fin de cycle d'identification, sur une seule commande du dispositif interrogateur, l'étiquette identifiée s'inhibe définitivement, les autres étiquettes lèvent leur inhibition momentanée. La procédure d'identification est ensuite réinitialisée pour identifier une autre étiquette. Ces opérations sont répétées jusqu'à ce que toutes les étiquettes aient été identifiées séparément. Cependant, ce procédé ne peut s'appliquer qu'à un ensemble statique d'étiquettes, qui ne peuvent être lues qu'une seule fois. Il ne peut donc pas être appliqué à un ensemble dynamique d'étiquettes, c'est-à-dire à des étiquettes pouvant entrer et sortir de façon aléatoire du champ électromagnétique émis par un dispositif interrogateur (comme c'est le cas dans l'application d'un caddie de supermarché).

Il existe, par ailleurs, des procédés qui cherchent à améliorer la technique décrite précédemment, en diminuant le temps d'acquisition des codes. L'un de ces procédés propose d'économiser le nombre des messages échangés entre le dispositif interrogateur et les étiquettes en parcourant une arborescence de recherche. Ce procédé est décrit dans la demande de brevet FR-A-2 776 094. Dans le document FR-A-2 776 096 (EP-A-0 942 386), il est proposé un procédé de lecture d'un ensemble d'étiquette par un dispositif interrogateur dans lequel les codes des étiquettes sont identifiés successivement. Le code d'une étiquette est lu bit par bit, un numéro d'ordre est attribué à cette étiquette, ce numéro est inscrit dans une liste. Ces trois étapes sont répétées pour toutes les autres étiquettes présentes dans le champ électromagnétique du dispositif interrogateur. Dans ces cas, la détection des codes d'identification des étiquettes se fait successivement, les unes à la suite des autres.

Ni ces procédés ni aucun des autres procédés connus jusqu'à maintenant ne permettent d'identifier, de façon simultanée, les codes d'identification des étiquettes présentes dans le champ électromagnétique d'un dispositif interrogateur. Or, une détection simultanée des codes d'identification permettrait d'optimiser le taux d'acquisition de ces codes.

Exposé de l'invention

L'invention a justement pour but de remédier aux inconvénients des techniques décrites précédemment. A cette fin, elle propose un procédé d'identification simultanée des codes d'identification d'un ensemble d'étiquettes, dans lequel les codes de toutes les étiquettes situées dans le champ électromagnétique de l'interrogateur sont lues simultanément, sans que les étiquettes aient besoin de s'inhiber. Ainsi, à chaque instant, le dispositif interrogateur a la même quantité d'informations sur chaque étiquette.

De façon plus précise, l'invention concerne un procédé de lecture d'un ensemble d'étiquettes électroniques comprenant chacune un code d'identification distinct de N bits et situées dans le champ électromagnétique d'un dispositif interrogateur tel que défini dans la revendication 1.

Ce procédé se caractérise par le fait qu'il consiste à interroger globalement l'ensemble des étiquettes sur la valeur de leur bit à un rang et lorsque le rang de bits a été traité, à interroger globalement les étiquettes sur la valeur de leur bit au rang suivant de manière à déterminer, rang de bits par rang de bits, les N bits des codes d'identification des étiquettes.

Avantageusement, le traitement consiste à :

a) pour le premier rang de bits, faire une mise à jour des codes en fonction des valeurs des bits qui viennent d'être déterminés avant de passer au rang de bits suivant,

b) pour les autres rangs de bits, si les valeurs de bits pour ce rang sont identiques, faire une mise à jour des codes en fonction du bit qui vient d'être déterminé avant de passer au rang de bits suivant s'il existe,

si les valeurs des bits pour ce rang sont différentes, établir une liste hypothétique de codes contenant tous les codes possibles pour ce rang, ces codes possibles étant établis à partir des bits déterminés lors des interrogations de rangs précédents ainsi que des deux possibilités de valeur de bit pour ce rang,

faire un appel des étiquettes en utilisant cette liste hypothétique de codes,

établir, après l'appel, une liste réelle de codes pour toutes les étiquettes ayant répondu à l'appel, avant de passer au rang de bits suivant s'il existe.

Selon le mode de réalisation préféré de l'invention, la liste réelle comporte, pour chaque étiquette, les bits des codes déterminés, lors des interrogations de rangs précédents, ainsi qu'un numéro d'ordre.

Avantageusement, les numéros d'ordre sont attribués aux étiquettes, consécutivement les uns aux autres, par le dispositif interrogateur.

De préférence, les numéros d'ordre des étiquettes sont mis à jour au fur et à mesure de la détection des bits de codes d'identification.

Selon un mode de réalisation de l'invention, le procédé consiste, après identification de toutes les étiquettes présentes dans lé champ électromagnétique, à vérifier les codes d'identification détectés par un appel de toutes les étiquettes déjà listées.

L'invention concerne également un système de lecture tel que défini dans la revendication 9.

Brève description des figures

La figure 1 représente le diagramme fonctionnel du procédé de l'invention ;
la figure 2 représente le chronogramme des échanges d'informations entre le dispositif interrogateur et une étiquette ;
la figure 3 représente un exemple du chronogramme relatif à l'appel du dispositif interrogateur vers six étiquettes ;
la figure 4 représente un exemple du chronogramme relatif à la phase de vérification des étiquettes ;
les figures 5 représentent des exemples de recherche arborescente avec le procédé de l'invention ; et
les figures 6 et 7 représentent schématiquement le système de l'invention.

Description détaillée de modes de réalisation de l'invention

Le procédé de l'invention consiste en une lecture simultanée des codes d'identification d'un ensemble d'étiquettes présentes dans le champ électromagnétique du dispositif interrogateur. Pour cela, on choisit de prendre des codes d'identification binaires, tous différents les uns des autres, mais de même longueur, cette longueur étant connue. Aussi, dans toute la suite de la description, on considérera que chaque code d'identification d'une étiquette contient N bits.

Le procédé d'identification des codes des étiquettes se fait, selon l'invention, rang de bits par rang de bits, en parcourant un arbre de recherche binaire, dont chaque branche représente la valeur 0 ou 1 des N bits, et dont chaque branche est connectée à la branche de valeur complémentaire 0 ou 1, par l'intermédiaire d'un noeud.

L'arborescence de recherche peut être suivie en partant du bit de poids le plus fort vers le bit de poids le plus faible, ou inversement, les deux parcours conduisant à deux procédés tout à fait symétriques.

Le procédé de l'invention propose donc de déterminer tous les bits constituant les codes des étiquettes, rang de bits par rang de bits, le rang de bits étant la position courante du pointeur de bits des codes d'identification en cours de lecture.

A chaque rang de bits, le dispositif interrogateur interroge globalement l'ensemble des étiquettes sur la valeur des bits à ce rang. Chaque étiquette répond en donnant la valeur de son bit. Pour cela, deux intervalles de temps contigus sont utilisés : pour un bit à 0, les étiquettes émettent un BIP dans l'un des intervalles de temps et pour un bit à 1, les étiquettes émettent un BIP dans l'autre intervalle de temps. Il peut alors se présenter deux cas différents :

- soit les valeurs des bits pour ce rang de bits k sont identiques, c'est-à-dire qu'il n'y a pas de réponse dans l'un de ces intervalles : alors le procédé continue au rang de bits suivant, après avoir mis à jour la valeur des codes par ajout, ou non, du poids du bit qui vient d'être déterminé ;

- soit il y a les deux valeurs de bits, c'est-à-dire un bit à 0 et un bit à 1 : il y a alors une possibilité de nouveau code ; ce cas est appelé ambiguïté ou collision ; il sera décrit en détail dans la suite de la description.

En d'autres termes, le procédé de l'invention consiste à parcourir l'arborescence binaire, rang de bits par rang de bits, afin de déterminer s'il y a une collision de bits ou non, c'est-à-dire s'il y a une possibilité de nouveau code. Une collision est gérée en attribuant un numéro d'ordre distinct à chaque étiquette ou groupe d'étiquettes ayant le même début de code. Les numéros d'ordre permettent de connaître, à chaque rang de bits, le nombre maximum de codes possibles présents à ce rang de bits, en tenant compte de toutes les hypothèses possibles.

Les numéros d'ordre permettent, dans le mode de réalisation préféré de l'invention, de faire l'appel de toutes les étiquettes afin d'éliminer les hypothèses non valides et donc de déterminer la liste réelle des codes d'identification.

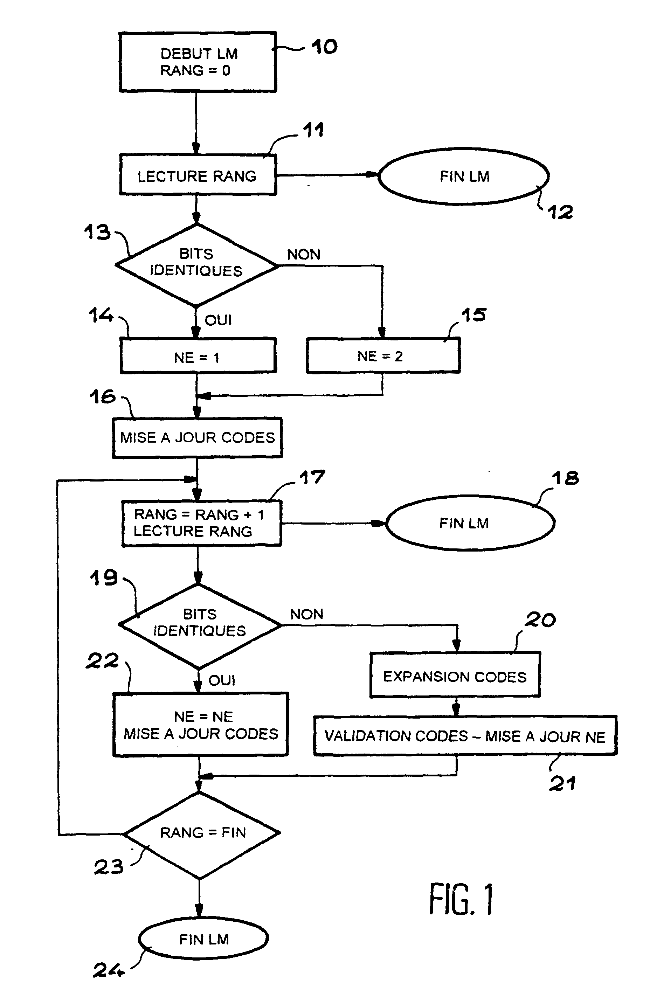

Sur la figure 1, on a représenté le diagramme fonctionnel du procédé de l'invention. Ce procédé commence par une étape 10 de commande de démarrage du cycle de lecture multiple, « LM ». Cette commande de démarrage permet d'initialiser ce cycle, auprès des étiquettes présentes dans le champ électromagnétique de l'interrogateur au moment de son émission. Une étiquette pénétrant dans le champ électromagnétique après cette commande et avant la fin du cycle d'identification ne participera pas à ce cycle d'identification. Elle restera silencieuse en attendant un nouveau message de début de cycle de lecture.

Au moment de cette commande de démarrage du cycle de lecture multiple, le rang de bits est initialisé à 0.

Le procédé de l'invention se poursuit par une étape 11 de lecture de ce premier rang, implicitement demandée dans la commande 10.

La lecture du premier rang de bits consiste à connaître la ou les valeurs du bit de ce premier rang, globalement pour tous les codes présents. Les codes étant binaires, il n'a que deux valeurs possibles, à savoir 0 ou 1.

Lorsque l'interrogateur envoie une commande de lecture du premier rang de bits (étape 11), toutes les étiquettes ayant reçu la commande 10 de début de lecture multiple, c'est-à-dire toutes les étiquettes présentes dans le champ électromagnétique au début du cycle de lecture, répondent par un BIP de valeur 0 ou de valeur 1. La valeur 0 ou 1 du BIP est donnée par l'intervalle de temps sur lequel les étiquettes répondent. Autrement dit, pour répondre que le bit, pour le rang de bits considéré, est à 0, les étiquettes émettent un signal BIP dans l'un des intervalles, et pour répondre que le bit est à 1, les étiquettes émettent un signal BIP dans l'autre intervalle.

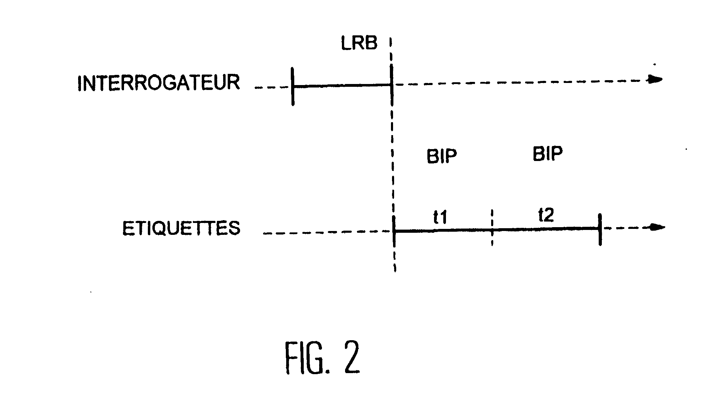

Sur la figure 2, on a représenté un exemple d'intervalles de réponse d'une étiquette E suite à la commande de lecture de rang de bits de l'interrogateur. On voit sur cette figure 2 que, suite à la commande de lecture du rang de bits LRB émise par l'interrogateur, chaque étiquette envoie soit un BIP sur l'intervalle t1, si son bit est à 0, ou bien sur l'intervalle t2 si son bit est à 1.

Si l'interrogateur ne détecte aucune réponse ni sur l'intervalle t1, ni sur l'intervalle t2, cela signifie qu'il n'y a aucun bit à 0 et aucun bit à 1 ; autrement dit, cela signifie qu'il n'y a plus d'étiquettes dans le champ électromagnétique de l'interrogateur et ce dernier arrête le procédé, dans une étape 12.

Dans le cas contraire, si les bits sont émis au temps t1 et/ou au temps t2, le procédé se poursuit par une étape de tests 13, qui consiste à vérifier s'il y a eu des réponses dans les deux intervalles t1 et t2. S'il y a des réponses uniquement dans l'un des deux intervalles t1 ou t2, alors on considère qu'il y a toujours potentiellement autant d'étiquettes et on connaît la valeur du bit de code à ce rang, en fonction de la réponse qui était soit dans l'intervalle t1, soit dans l'intervalle t2. Dans ce cas, le numéro d'ordre NO de l'étiquette ou du groupe d'étiquettes ayant le même premier bit est 0 (étape 14).

Dans le cas où l'interrogateur détecte des bits différents, c'est-à-dire des bits à 1 et des bits à 0, le groupe d'étiquettes ayant répondu dans l'intervalle de temps t1 prend le numéro d'ordre 0 et l'autre groupe le numéro d'ordre 1 (étape 15).

Le procédé se poursuit ensuite par une étape 16 de mise à jour des codes en fonction des valeurs des bits identifiés précédemment. Cette mise à jour des codes constitue le début de la création de la liste réelle contenant à la fois les parties de codes déjà détectées des étiquettes, et les numéros d'ordre qui sont attribués à chacune des étiquettes, jusqu'au rang de bits en cours de traitement.

Lorsque le premier rang de bits a été traité, une étape 17 consiste à incrémenter le rang de bits k pour passer au rang de bits suivant k + 1, puis à lire ce nouveau rang de bits k + 1.

L'étape de lecture 17 du rang de bits consiste à interroger les étiquettes sur la valeur de bit à ce rang de bits k + 1. Si l'interrogateur ne détecte aucune réponse ni sur l'intervalle t1 ni sur l'intervalle t2, il en déduit qu'il n'y a plus d'étiquettes dans le champ électromagnétique et que la lecture est terminée (étape 18).

Par contre, si l'interrogateur détecte des réponses, le procédé se poursuit par une étape de test 19 qui consiste à vérifier si tous les bits détectés sont identiques.

Si tel est le cas, alors on en déduit qu'il y a toujours potentiellement le même nombre d'étiquettes ; le numéro d'ordre NO, calculé par chaque étiquette ou groupe d'étiquettes, dont le code est le même jusqu'au rang de bits considérés, reste le même ; la valeur du bit de code, à ce rang de bits, est déterminée sans ambiguïté. La liste réelle des codes détectés (c'est-à-dire la partie des codes déjà détectée) est mise à jour (étape 22).

Le procédé de l'invention, jusqu'au rang de bits k, a établi un numéro d'ordre pour chaque étiquette. Ces numéros d'ordre ont été construits de manière à être consécutifs, de sorte que l'interrogateur connaît à tout moment le nombre d'étiquettes présentes dans le champ électromagnétique lors du démarrage du cycle d'interrogation. Ces numéros d'ordre sont compris entre 0 et NE - 1, où NE est le nombre d'étiquettes ou le nombre de groupes d'étiquettes ayant la même partie de code, jusqu'à ce rang de bits k.

Dans le cas où la réponse au test 19 est non, c'est-à-dire dans le cas où il y a eu des réponses à la fois sur l'intervalle t1 et sur l'intervalle t2, alors on considère qu'il y a plus de groupes d'étiquettes possibles que de groupes d'étiquettes détectés jusqu'à ce rang de bits, et l'interrogateur lance une phase spécifique afin de préciser cette nouvelle information et lever l'ambiguïté due à la collision.

Dans le cas où il y a une collision, alors le procédé propose d'effectuer une étape d'expansion des codes, dans laquelle on considère qu'il y a au moins deux possibilités de codes différents, supplémentaires ; à ce niveau le numéro d'ordre NO est pair par construction.

Autrement dit, le procédé de l'invention établit une liste hypothétique de tous les cas possibles pour le nouveau rang de bits et teste toutes les hypothèses de bits possibles comprises dans cette liste. Pour cela, le procédé consiste à faire l'hypothèse majorante qu'il y a potentiellement deux fois plus d'étiquettes présentes ou de groupes d'étiquettes présentes, que de groupes d'étiquettes détectées, jusqu'à cet instant. L'ambiguïté provient du manque d'informations, à ce niveau, du noeud de l'arbre binaire, où il y a réellement une bifurcation à prendre en compte. En effet, à chaque noeud de l'arbre, il y a potentiellement deux solutions possibles, c'est-à-dire un bit à 0 et un bit à 1, pour le rang de bits suivant.

Aussi, pour prendre en compte cette hypothèse majorante, le procédé de l'invention utilise l'évolution des numéros d'ordre. Plus précisément, si l'étiquette avait un numéro d'ordre égal à k, alors son numéro d'ordre devient 2k plus la valeur supposée du bit suivant (étape 20).

On notera que, dans le cas d'une collision au premier rang de bits (c'est-à-dire au rang de bits 0), la phase d'expansion est inutile : en effet, il n'y a pas d'ambiguïté, puisque l'on sait qu'il y a au moins deux étiquettes dont le code commence, l'un par 0, et l'autre par 1. Les numéros d'ordre attribués sont donc, forcément 0 et 1.

Le procédé consiste ensuite, dans l'étape 21, à faire évoluer l'ensemble de codes identifiés jusqu'à ce rang k. De façon plus précise, le code devient :

$$\text{code déjà détecté} + bit_k \times 2^{(N-k-1)},$$

si la détection se fait à partir du bit de plus fort poids ou

$$\text{code déjà détecté} + bit_k \times 2^{k-1},$$

si la détection se fait à partir du bit de plus faible poids.

En d'autres termes, l'étape 21 consiste à valider les hypothèses faites lors de l'étape d'expansion des codes (étape 20). Pour cela, l'interrogateur effectue un appel sur l'ensemble des numéros d'ordre et ne garde, pour la suite du procédé, que les étiquettes qui ont répondu présentes à cet appel.

Plus précisément, l'étape d'appel des numéros d'ordre démarre par un message spécifique, envoyé par l'interrogateur, vers toutes les étiquettes. Chaque étiquette répond par un bip à son tour d'appel, dans l'ordre des numéros d'ordre. Si une étiquette est absente, elle n'émet pas de bip, alors l'interrogateur retourne systématiquement, après la réponse de chaque étiquette, une information indiquant qu'il y a eu présence ou absence de l'étiquette. En cas de non réponse d'une étiquette, les étiquettes dont le numéro d'ordre est supérieur à celle qui n'a pas répondu, décrémente de 1, leur numéro d'ordre. Ces numéros d'ordre sont ainsi mis à jour jusqu'au prochain appel.

Quand une phase d'appel a démarré, les étiquettes utilisent les numéros d'ordre qu'elles avaient au début de cette phase pour identifier l'intervalle de temps dans lequel elles doivent répondre.

Par ailleurs, les étiquettes remettent à jour leur propre numéro d'ordre.

Les numéros d'ordre sont remis à jour par toutes les étiquettes en veillant à ce qu'ils soient distincts pour chaque code différent, mais identiques pour les étiquettes ayant un même début de code. Ils sont remis à jour de façon à être consécutifs les uns aux autres.

De plus, comme l'interrogateur retourne systématiquement une information de présence ou d'absence de chaque étiquette, les étiquettes ont donc toutes les informations qui leur permettent, éventuellement, de calculer les codes de toutes les autres étiquettes et/ou le nombre total d'étiquettes présentes dans le champ électromagnétique de l'interrogateur.

Le procédé de l'invention se poursuit ensuite par une étape 23, qui est un test pour vérifier si tous les rangs de bits ont bien été traités. Si ce n'est pas le cas, alors le procédé reprend à l'étape 17, dans lequel le rang de bits k est augmenté de 1. Si par contre, l'interrogateur détecte qu'il s'agissait du dernier rang de bits, alors le cycle d'interrogation se termine à l'étape 24.

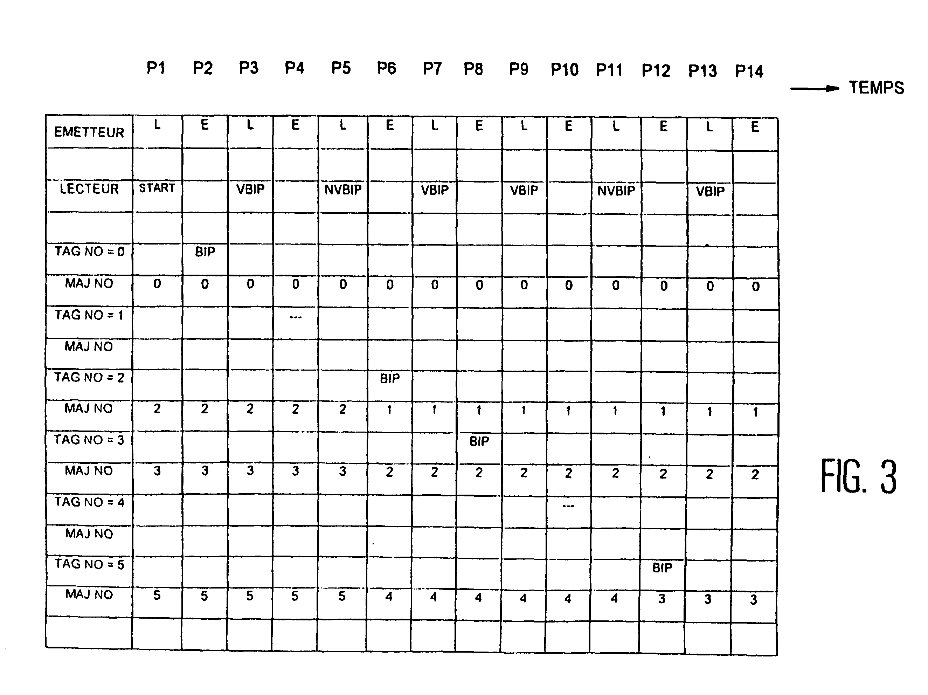

Sur la figure 3, on a représenté un tableau, montrant un exemple dans lequel six étiquettes sont interrogées. Ce tableau comporte 14 colonnes qui représentent chacune un intervalle de temps P1 à P14.

La première ligne de ce tableau identifie l'émetteur. Pendant les intervalles type L, l'interrogateur envoie des messages aux étiquettes ; pendant les intervalles type E, l'interrogateur reçoit les messages des étiquettes. Plus précisément, pendant l'intervalle P1, le lecteur (ou interrogateur) émet un message START signifiant que le cycle de lecture des codes commence. Les autres messages émis par l'interrogateur sont soit le message VBIP, qui indique que le lecteur a vu un bip de réponse des étiquettes, soit le messages NVBIP, qui indique que le lecteur n'a vu aucun bip. Chacun de ces messages VBIP ou NVBIP intervient après un intervalle E pendant lequel les étiquettes interrogées peuvent répondre.

Dans le tableau de la figure 3, les troisième, cinquième, septième, neuvième, onzième et treizième lignes représentent les réponses ou les absences de réponse de chaque étiquette. La troisième ligne du tableau représente les signaux émis par la première étiquette dont le numéro d'ordre est 0 (notée Tag NO = 0). La ligne suivante, intitulée MAJNO indique la valeur que prend le prochain numéro d'ordre. Les lignes suivantes représentent, respectivement, les autres étiquettes hypothétiques dont les numéros d'ordre sont 1, 2, 3, 4 et 5, avec, à chaque fois en dessous, la ligne indiquant la valeur que prendra le prochain numéro d'ordre.

On voit ainsi, sur ce tableau, que l'étiquette, dont le numéro d'ordre NO est 0, émet un BIP, à l'intervalle P2. L'étiquette suivante dont le numéro d'ordre est 1 n'émet pas de BIP à l'intervalle P4, ce qui montre qu'elle n'existe pas. Puis, l'étiquette NO = 2 émet un BIP à l'intervalle P6. Mais comme l'étiquette NO = 1 est inexistante, le numéro d'ordre de l'étiquette NO = 2 est décrémenté de 1, et donc l'étiquette NO = 2 prend, comme prochain numéro d'ordre, le numéro 1. Par conséquent, l'étiquette, dont le numéro d'ordre initial NO était 3, prend alors le numéro d'ordre 2.

L'étiquette suivante, dont le numéro d'ordre initial NO était 4, ne répond pas non plus dans la période P10, ce qui implique que l'étiquette, dont le numéro d'ordre NO était initialement 5 (et qui était devenu 4, du fait de l'absence de réponse de l'étiquette 1) prend le numéro d'ordre 3 à la période P12.

Lorsque tous les numéros d'ordre ont été remis à jour, la liste des codes est également remise à jour, en fonction des étiquettes restantes, c'est-à-dire des étiquettes qui ont répondu par un BIP à l'appel de l'interrogateur.

Le procédé de l'invention peut comporter une étape supplémentaire qui consiste, à la fin du procédé, lorsque toutes les étiquettes ont été détectées, à vérifier la bonne détection de ces étiquettes. En effet, comme l'on dispose du nombre total d'étiquettes et que chaque étiquette a un numéro d'ordre unique et consécutif, il est possible de faire un appel, auquel chaque étiquette répond par son code d'identification, afin de vérifier la détection correcte de l'ensemble des étiquettes.

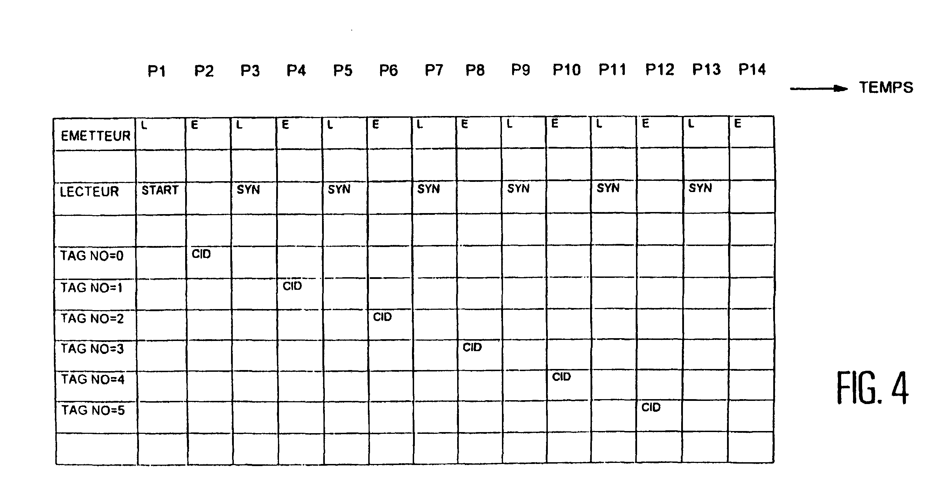

On a représenté sur la figure 4 un tableau, du type de celui de la figure 3, montrant l'évolution, en fonction des périodes P, du dialogue instauré entre l'interrogateur et les étiquettes. Tout comme sur la figure 3, la première ligne du tableau identifie l'émetteur, dans laquelle :

- la lettre L signifie qu'il s'agit d'une période pendant laquelle l'interrogateur émet un message : soit START qui signifie qu'il s'agit du début du cycle de vérification, soit SYN qui indique que c'est à l'étiquette suivante d'envoyer son code ; et
- la lettre E correspond à une période pendant laquelle les étiquettes émettent leur code d'identification.

Ainsi, pendant la période P1, l'interrogateur envoie le message START de début de phase de vérification. La première étiquette, dont le numéro d'ordre est NO = 0, répond en énonçant son code d'identification, appelé CID sur le tableau. Ensuite, à la période P3, l'interrogateur émet un message SYN, qui indique que c'est à l'étiquette suivante d'envoyer son code ; à la période P4, l'étiquette NO = 1 émet son code d'identification. Puis à la période P5, l'interrogateur réémet un message SYN, et l'étiquette suivante de numéro d'ordre 2 envoie son code. Il en est ainsi jusqu'à la période P12, où l'étiquette de numéro d'ordre 5 envoie son code.

Enfin, à l'intervalle P13, l'interrogateur réémet un message SYN demandant à l'étiquette suivante d'envoyer son code. Or, il n'y a pas d'étiquettes suivantes, c'est-à-dire d'étiquette portant le numéro d'ordre 6, donc la phase de vérification s'arrête.

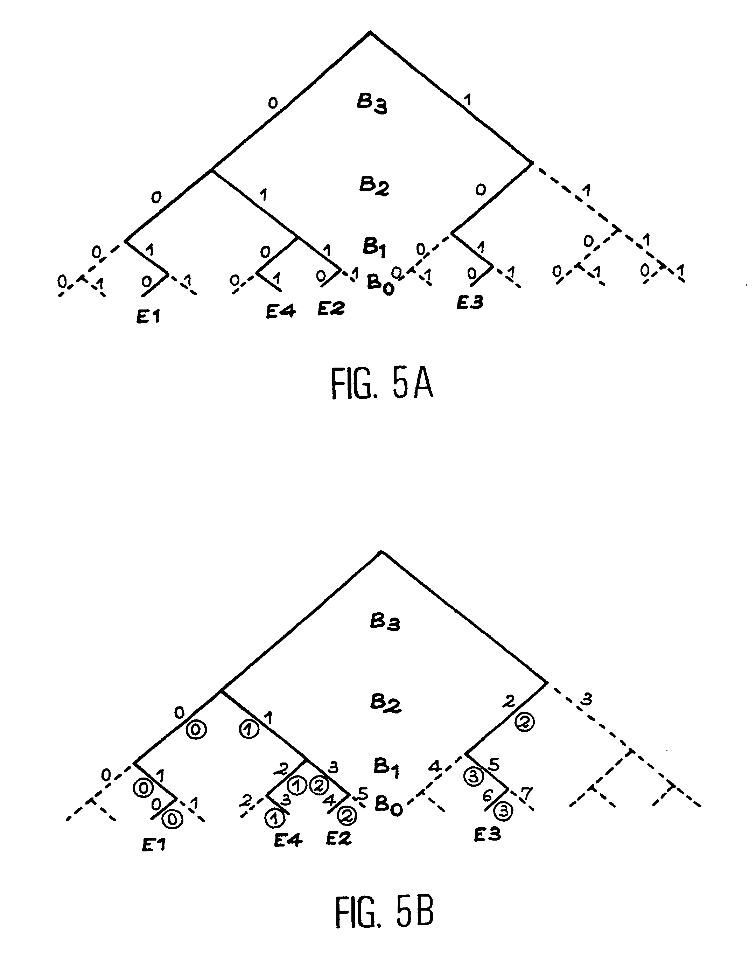

Sur les figures 5A à 5C, on a représenté un exemple montrant la recherche arborescente pour déterminer les codes d'identification de quatre étiquettes, appelées E1, E2, E3 et E4, et comportant chacune quatre bits. L'étiquette E1 a pour code 0010, l'étiquette E2 a pour code 0110, l'étiquette E3 a pour code 1010 et l'étiquette E4 a pour code 0101. Ces codes de quatre bits seront nommés, de façon plus générale, $B_3$, $B_2$, $B_1$, $B_0$, où $B_3$ est le bit de plus fort poids et $B_0$ le bit de plus faible poids.

La figure 5A montre l'arbre construit en partant du bit de plus fort poids, à savoir $B_3$, puis en décomposant le code jusqu'au bit de plus faible poids, à savoir $B_0$. Sur cette figure, on a représenté en pointillé toutes les valeurs binaires possibles et en trait plein, les chemins suivis sur l'arbre pour déterminer le code d'identification de ces quatre étiquettes E1 à E4.

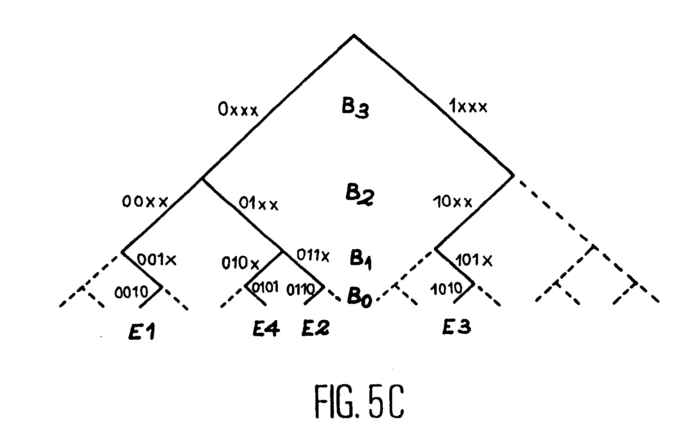

Sur la figure 5C, on a représenté le même arbre binaire, sur lequel on a montré l'évolution de codes d'identification.

Ainsi, on a déterminé, lors de l'interrogation du premier rang de bits, les codes 0xxx et 1xxx, où bien sûr xxx sont les bits non encore identifiés. Au second rang de bits, c'est-à-dire au rang de bits B2, on a identifié le code 00xx, 01xx et 10xx. Au troisième rang de bits, c'est-à-dire au rang de bits B1, le procédé a identifié les codes 001x, 010x, 011x et 101x. Au quatrième rang de bits, c'est-à-dire le dernier rang de bits pour l'exemple donné sur ces figures 5, les codes identifiés sont 0010, qui correspond à l'étiquette E1, 0101, qui correspond à l'étiquette E4, 0110, qui correspond à l'étiquette E2 et 1010, qui correspond à l'étiquette E3.

Sur la figure 5B, on a représenté l'évolution des numéros d'ordre pendant la recherche arborescente. Pour mieux comprendre cette évolution, on a noté, par un chiffre normal, le numéro d'ordre attribué de façon hypothétique, à chaque code possible, c'est-à-dire attribué lors de l'étape 20 d'expansion des codes et par des chiffres entourés d'un cercle, les numéros d'ordre réels, qui seront réellement attribués à chaque étiquette, après l'appel effectué par l'interrogateur (étape 21). On voit ainsi que pour le premier rang de bits, à savoir le bit $B_3$, il y a, comme on l'a expliqué, forcément deux possibilités, donc aucune ambiguïté sur les numéros d'ordre. Au second rang de bits, à savoir le bit $B_2$, l'interrogateur attribue, à chaque possibilité de nouveaux codes (selon une liste hypothétique), un numéro d'ordre : 0, 1, 2 et 3. Or, il s'avère, lors de la détection des bits (voir sur les figures 5A et 5C) qu'aucune étiquette ne correspond au numéro d'ordre 3. Donc, le procédé met à jour les numéros d'ordre des étiquettes, présentes réellement. Ces numéros d'ordre sont donc 0, 1 et 2, pour les parties de codes détectés au deuxième rang de bits. Pour le troisième rang des bits, à savoir $B_1$, le procédé attribue de façon hypothétique, les numéros d'ordre 0 à 5. Lors de l'appel des étiquettes, les numéros d'ordre sont remis à jour de 0 à 3, puisqu'aucune étiquette ne correspondait aux numéros d'ordre hypothétiques 0 et 4. De même pour le quatrième rang de bits, on voit que les numéros d'ordre réels, attribués aux étiquettes, sont 0 pour l'étiquette E1, 1 pour l'étiquette E4, 2 pour l'étiquette E2, et trois pour l'étiquette E3.

Selon un mode de réalisation de l'invention, l'appel des numéros d'ordre n'est pas effectué systématiquement ; il peut être déclenché uniquement lorsqu'il y a un risque de débordement, soit de la taille des numéros d'ordre qui peut être limitée, du fait même de l'électronique mis en oeuvre dans l'étiquette, soit de la liste hypothétique des codes d'identification qui est gérée par l'interrogateur.

Le procédé de l'invention, qui vient d'être décrit, est mis en oeuvre par un système comportant, d'une part, un dispositif interrogateur et, d'autre part, un ensemble d'étiquettes.

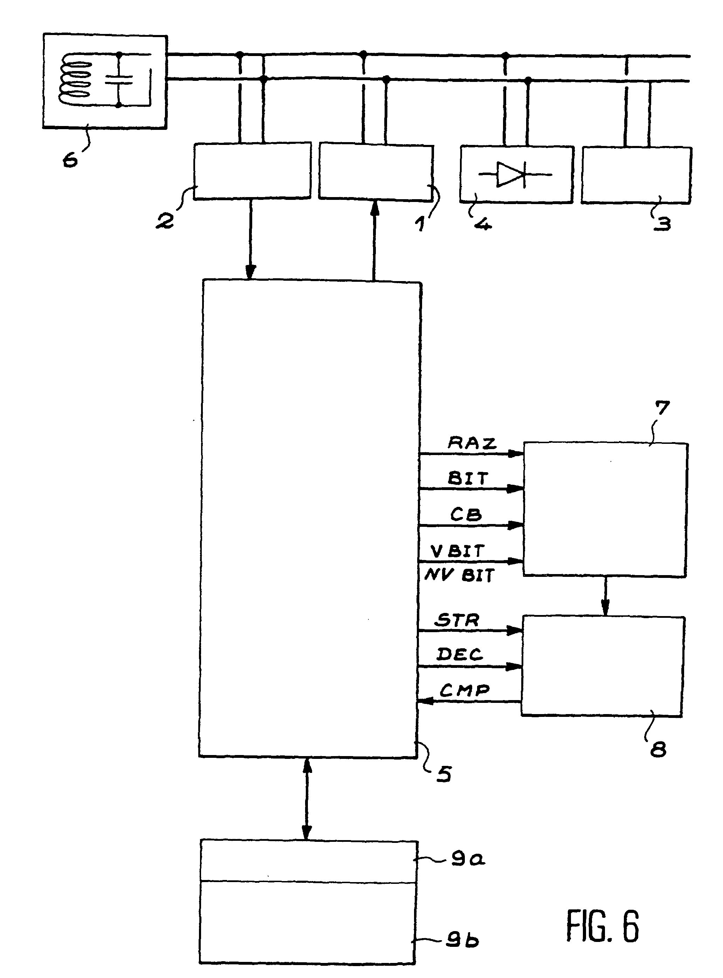

Sur la figure 6, on a représenté un exemple d'architecture d'une de ces étiquettes. Cette étiquette comporte des moyens électromagnétiques de transmission 6, ainsi que des moyens électroniques de modulation 1 et de démodulation 2, qui lui permettent de communiquer des informations binaires vers le dispositif interrogateur, ou bien de recevoir des informations binaires de ce dispositif interrogateur. Chaque étiquette comporte, de plus, des moyens électroniques 4 de récupération d'énergie, ainsi que des moyens 3 d'extraction d'horloge, ces moyens 3 et 4 étant nécessaires, puisque l'étiquette est passive. Ces moyens 1, 2, 3, 4 et 6 sont déjà décrits dans la demande de brevet FR-A-2 677 135 ; ils ne seront donc pas décrits de façon plus détaillée dans la présente demande.

Chaque étiquette comporte, par ailleurs, des moyens électroniques 5, appelés « séquenceur », qui permettent de séquencer une suite d'actions à entreprendre en fonction des messages reçus du dispositif interrogateur, ainsi que des moyens de stockage temporaires ou permanents d'informations, référencés 9a et 9b. Ces moyens de mémorisation comportent, d'une part, une mémoire, référencée 9a, destinée à contenir le code d'identification, et une mémoire de stockage, référencée 9b, qui est destinée à stocker des informations liées à l'application ou au domaine d'application.

Cette étiquette comporte, de plus, une logique de gestion de numéros d'ordre, référencée 7, et dont le rôle est :

- dans une phase de collision des bits, de calculer le numéro d'ordre hypothétique selon la formule de l'expansion du code, à savoir : $n \rightarrow 2 \times n +$ valeur du bit du rang courant de l'étiquette ; et
- pendant la phase d'appel, de décrémenter de 1 le numéro d'ordre, si une étiquette, de numéro d'ordre inférieur, est détectée comme inexistante.

Chaque étiquette comporte aussi un registre de numéro d'ordre, référencé 8, dont le rôle est de stocker la valeur du numéro d'ordre pendant la phase d'appel. La logique de numéros d'ordre 7 et le registre des numéros d'ordre 8 sont reliés directement l'un à l'autre.

Un décompteur, associé au registre des numéros d'ordre 8 permet, lors d'une séquence d'appel, de connaître l'intervalle dans lequel l'étiquette doit répondre présente.

La logique des numéros d'ordre 7 reçoit, du séquenceur, des informations de remise à zéro (RAZ), de rangs de bits (BIT), des informations de collision (CB), et les signaux VBIP et NVBIP, indiquant respectivement que l'interrogateur a vu ou n'a pas vu un bit. Le registre de numéros d'ordre 8 reçoit également deux informations provenant du séquenceur 5, à savoir l'information STR, qui signifie le transfert du numéro d'ordre vers le décompteur et l'information DEC, relative au déblocage du numéro d'ordre. Le registre de numéros d'ordre 8 transmet au séquenceur 5 une information de comparaison CMP, qui signifie que c'est à l'étiquette d'émettre puisque son numéro d'ordre est égal à 0.

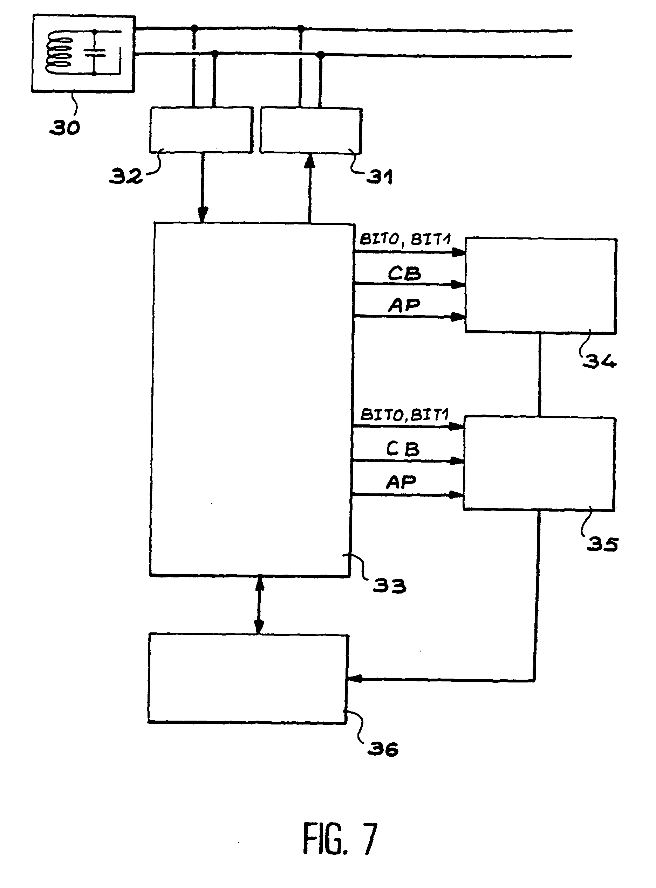

Sur la figure 7, on a représenté, schématiquement, l'architecture d'un dispositif interrogateur, tel qu'utilisé dans le système de l'invention. Ce dispositif interrogateur comporte des moyens électromagnétiques de transmission, référencés 30, ainsi que des moyens électroniques de modulation 31 et de démodulation 32, qui lui permettent de communiquer des informations binaires vers l'ensemble des étiquettes, ou bien de recevoir des informations binaires de ces dernières. Ce dispositif interrogateur comporte, par ailleurs, un séquenceur 33 dont le rôle est de séquencer une suite d'actions à entreprendre, en fonction des messages reçus des étiquettes. Le dispositif interrogateur comporte, de plus, des moyens de stockage temporaires ou permanents d'informations, référencés 36. Ces moyens de stockage 36 comprennent, notamment, une liste des codes en cours d'identification LCOD, qui est la liste réelle de codes, ou des parties de codes déjà détectées, associé(e)s au numéro d'ordre affecté à chacune des étiquettes. Plus précisément, cette liste réelle de codes détectés est une zone mémoire, où le dispositif interrogateur range et ordonne le code ou partie de code déjà détecté. Ce rangement est dynamique au sens où une étiquette peut à tout moment quitter le champ magnétique de l'interrogateur. Il est donc possible de supprimer des codes de cette liste.

Le dispositif interrogateur de l'invention comporte, de plus, une logique de gestion du numéro d'ordre, référencé 34, dont le rôle est de calculer le numéro d'ordre pendant les deux phases suivantes :

- pendant la phase de collision des bits : le nombre de numéros d'ordre NE est calculé de la façon suivante : $NE \rightarrow 2 \times NE$ ;
- pendant la phase d'appel : le nombre de numéros d'ordre NE est décrémenté de 1, s'il y a absence d'une étiquette de numéro d'ordre inférieur.

Cette logique de gestion 34 reçoit des informations provenant du séquenceur 33, à savoir les informations relatives à la valeur du bit 0 ou 1, une information relative à une présence de collision de bits et une information relative à la phase d'appel.

Le dispositif interrogateur comporte, de plus, une logique de calcul des codes 35, qui reçoit, de la logique de calcul de numéros d'ordre 34, le nombre de numéros d'ordre NE calculés par le registre 35. Le registre 35 assure le calcul des codes et retransmet le code ainsi calculé à la liste des codes 36.

## Revendications

1. Procédé de lecture d'un ensemble d'étiquettes électroniques (E1, E2, E3, E4) comprenant chacune un code d'identification distinct ($B_3$, $B_2$, $B_1$, $B_0$) de N bits et situées dans le champ électromagnétique d'un dispositif interrogateur, **caractérisé en ce qu'**il consiste à interroger globalement (11) l'ensemble des étiquettes sur la valeur de leur bit à un rang et lorsque le rang de bits a été traité, à interroger globalement (17) les étiquettes sur la valeur de leur bit au rang suivant de manière à déterminer, rang de bits par rang de bits, les N bits des codes d'identification des étiquettes.

2. Procédé selon la revendication 1, **caractérisé en ce que** chaque étiquette interrogée donne la valeur de son bit en utilisant deux intervalles de temps contigus (t1, t2), une étiquette ayant un bit à 0 émet une réponse dans l'un des intervalles de temps, une étiquette ayant un bit à 1 émet une réponse dans l'autre intervalle de temps.

3. Procédé selon l'une des revendications 1 ou 2, **caractérisé en ce que** le traitement consiste à :

   a) pour le premier rang de bits, faire une mise à jour (16) des codes en fonction des valeurs des bits qui viennent d'être déterminés avant de passer au rang de bits suivant,
   b) pour les autres rangs de bits, si les valeurs de bits pour ce rang sont identiques, faire une mise à jour (22) des codes en fonction du bit qui vient d'être déterminé avant de passer au rang de bits suivant s'il existe,

   si les valeurs des bits pour ce rang sont différentes, établir (20) une liste hypothétique de codes contenant tous les codes possibles pour ce rang, ces codes possibles étant établis à partir des bits déterminés lors des interrogations de rangs précédents ainsi que des deux possibilités de valeur de bit pour ce rang,
   faire un appel des étiquettes en utilisant cette liste hypothétique de codes,
   établir (21), après l'appel, une liste réelle de codes pour toutes les étiquettes ayant répondu à l'appel, avant de passer au rang de bits suivant s'il existe.

4. Procédé selon la revendication 3, **caractérisé en ce que** la liste réelle comporte, pour chaque étiquette, les bits des codes déterminés lors des interrogations des rangs précédents ainsi qu'un numéro d'ordre (NO).

5. Procédé selon la revendication 4, **caractérisé en ce que** les numéros d'ordre (NO) sont consécutifs les uns aux autres.

6. Procédé selon l'une quelconque des revendications 4 ou 5, **caractérisé en ce que** les numéros d'ordre (NO) des étiquettes sont mis à jour au fur et à mesure de la détection des bits des codes d'identification.

7. Procédé selon l'une quelconque des revendications 1 à 6, **caractérisé en ce qu'**il consiste, après identification de toutes les étiquettes présentes dans le champ électromagnétique, à vérifier les codes d'identification détectés par un appel de toutes les étiquettes déjà listées.

8. Procédé selon la revendication 7, **caractérisé en ce que** l'appel de toutes les étiquettes déjà listées utilise les numéros d'ordre (NO).

9. Système de lecture d'un ensemble d'étiquettes électroniques (E1, E2, E3, E4) situées dans le champ électromagnétique d'un dispositif interrogateur, les étiquettes ayant chacune un code d'identification distinct ($B_3$, $B_2$, $B_1$, $B_0$) de N bit, le système comportant l'ensemble d'étiquettes et le dispositif interrogateur, **caractérisé en ce que** le dispositif interrogateur comporte des moyens émetteurs/récepteurs (30, 31, 32) pour interroger globalement, à chaque rang de bits, l'ensemble des étiquettes sur la valeur de leur bit à ce rang,

des moyens de séquencement (33) pour séquencer une suite d'actions que le dispositif interrogateur a à entreprendre,

des moyens de mémorisation (36) d'une liste réelle de codes ou de parties de codes déjà détectées,

des moyens (34) pour gérer, à chaque rang de bits, une interrogation globale de l'ensemble des étiquettes, ces moyens recevant des informations relatives à la valeur des bits, une information relative à la présence d'une collision, une information relative à une étape d'appel des étiquettes,

des moyens de calcul des codes (35),

et **en ce que** chaque étiquette comporte des moyens émetteurs/récepteurs (6, 1) pour répondre en donnant la valeur de son bit à ce rang,

des moyens de séquencement (5) pour séquencer une suite d'actions que l'étiquette a à entreprendre,

des moyens de mémorisation (9) destinés à contenir le code d'identification,

des moyens de calcul et de gestion de numéros d'ordre (7) en cas de collision et pendant l'étape d'appel,

un registre de numéros d'ordre (8) pour stocker la valeur du numéro d'ordre pendant l'étape d'appel.

**Patentansprüche**

1. Verfahren zum Lesen einer Gruppe elektronischer Etikette (E1, E2, E3, E4), von denen jede einen unterschiedlichen Identifizierungscode ($B_3$, $B_2$, $B_1$, $B_0$) aus N Bits aufweist und die sich in dem elektromagnetischen Feld einer Abfragevorrichtung befinden,

**dadurch gekennzeichnet, dass** es darin besteht, die Gesamtheit der Etikette global bezüglich des Werts ihres Bits eines Rangs abzufragen (11) und, wenn der Bitrang verarbeitet worden ist, die Etikette global bezüglich des Werts ihres Bits des nächsten Rangs abzufragen (17), um Bitrang für Bitrang die N Bits der Identifizierungscodes der Etikette zu bestimmen.

2. Verfahren nach Anspruch 1, **dadurch gekennzeichnet, dass** jedes abgefragte Etikett den Wert seines Bits angibt, indem es zwei aneinandergrenzende Zeitintervalle (t1, t2) benutzt, wobei ein Etikett mit einem 0-Bit eine Antwort in einem der Zeitintervalle aussendet, und ein Etikett mit einem 1-Bit eine Antwort in dem anderen Zeitintervall aussendet.

3. Verfahren nach einem der Ansprüche 1 oder 2, **dadurch gekennzeichnet, dass** es darin besteht:

a) für den ersten Bitrang eine Aktualisierung der Codes (16) in Abhängigkeit von den Werten der soeben bestimmten Bits durchzuführen, ehe man weitergeht zum nächsten Bitrang,
b) für die anderen Bitränge, wenn die Werte der Bits dieses Rangs identisch sind, eine Aktualisierung der Codes in Abhängigkeit von dem soeben bestimmten Bit durchzuführen, ehe man weitergeht zum nächsten Bitrang, wenn es ihn gibt,

wenn die Werte der Bits dieses Rangs unterschiedlich sind, eine hypothetische Code-Liste erstellen (20), die alle möglichen Codes dieses Rangs enthält, wobei diese möglichen Codes aufgrund der Bits, die während der vorhergehenden Rang-Abfragen bestimmt wurden, sowie der beiden Bitwert-Möglichkeiten dieses Rangs erstellt werden,

einen Etikettenaufruf durchzuführen, wobei man diese hypothetische Code-Liste benutzt,

nach dem Aufruf eine reelle Code-Liste für alle Etikette zu erstellen (21), die auf den Aufruf geantwortet haben, ehe man weitergeht zum nächsten Bitrang, wenn es ihn gibt.

4. Verfahren nach Anspruch 3, **dadurch gekennzeichnet, dass** die reelle Liste für jedes Etikett die Bits der bei den vorhergehenden Abfragen der Ränge bestimmten Codes sowie eine Ordnungsnummer (NO) umfasst.

5. Verfahren nach Anspruch 4, **dadurch gekennzeichnet, dass** die Ordnungsnummern (NO) aufeinanderfolgend bzw. fortlaufend sind.

6. Verfahren nach einem der Ansprüche 4 oder 5, **dadurch gekennzeichnet, dass** die Ordnungsnummem (NO) der Etikette in dem Maße aktualisiert werden, wie die Bits der Identifizierungscodes detektiert werden.

**7.** Verfahren nach einem der Ansprüche 1 bis 6, **dadurch gekennzeichnet, dass** es darin besteht, nach Identifizierung aller in dem elektromagnetischen Feld vorhandenen Etikette die detektierten Identifizierungscodes durch einen Aufruf aller schon aufgelisteten Etikette zu verifizieren.

**8.** Verfahren nach Anspruch 7, **dadurch gekennzeichnet, dass** der Aufruf aller schon aufgelisteten Etikette die Ordnungsnummem (NO) benutzt.

**9.** System zum Lesen einer Gruppe elektronischer Etikette (E1, E2, E3, E4), die sich in dem elektromagnetischen Feld einer Abfragevorrichtung befinden und von denen jede einen unterschiedlichen Identifizierungscode ($B_3$, $B_2$, $B_1$, $B_0$) aus N Bits aufweist, wobei das System die Gesamtheit der Etikette und die Abfragevorrichtung umfasst **dadurch gekennzeichnet, dass** die Abfragevorrichtung Sende-Empfangseinrichtungen (30, 31, 32) umfasst, um für jeden Bitrang alle Etikette global nach dem Wert ihres Bits dieses Rangs abzufragen,

Folgesteuerungseinrichtungen (33) umfasst, um den Ablauf einer Folge von Aktionen zu steuern, welche die Abfragevorrichtung durchführen muss,

Speichereinrichtungen (36) einer reellen Codeliste oder von Teilen von schon detektierten Codes umfasst,

Einrichtungen (34) umfasst, um für jeden Bitrang eine globale Abfrage aller Etikette zu leiten, wobei diese Einrichtungen Informationen bezüglich des Werts der Bits, eine Information bezüglich des Vorhandenseins einer Kollision und eine Information bezüglich eines Aufrufschritts der Etikette erhalten,

Codeberechnungseinrichtungen (35) umfasst,

und dadurch, dass jedes Etikett Sende-Empfangseinrichtungen (6, 1) umfasst, um zu antworten, indem es den Wert seines Bits dieses Rangs angibt,

Folgesteuerungseinrichtungen (5) umfasst, um den Ablauf einer Folge von Aktionen zu steuern, die das Etikett durchführen muss,

Speichereinrichtungen (9) umfasst, die den Identifizierungscode enthalten,

Einrichtungen (7) zur Berechnung und Verwaltung der Ordnungsnummem im Kollisionsfall und während des Aufrufschritts umfasst,

eine Ordnungsnummemregister (8) umfasst, um den Wert der Ordnungsnummer während des Aufrufschritts zu speichern.

## Claims

**1.** Process for reading an array of electronic tags (E1, E2, E3, E4), each comprising a distinct identification code (B3, B2, B1, B0) of N bits and located in the electromagnetic field of an interrogator device, **characterized in that** it consists of globally interrogating (11), all the tags with respect to the value of their bit at one rank and when the bit rank has been processed, globally interrogating (17) the tags with respect to the value of their bit at the following rank so as to determine bit rank by bit rank the N bits of the identification codes of the tags.

**2.** Process according to claim 1, **characterized in that** each interrogated tag gives the value of its bit using two contiguous time intervals (t1, t2), a tag having a bit at 0 emitting a response in one of the time intervals, a tag having a bit at 1 emitting a response in the other time interval.

**3.** Process according to one of the claims 1 or 2, **characterized in that** processing consists of:

a) for the first bit rank, updating (16) the codes as a function of the bit values determined prior to passing to the following bit rank,
b) for the other bit ranks, if the values of the bits for said rank are identical, updating (22) the codes as a function of the bit just determined before passing to the following bit rank, if it exists,

- if the values of the bits for this rank are different, establishing (20) a hypothetical list of codes containing all the possible codes for this rank, said possible code being established on the basis of bits determined during interrogations of preceding ranks, as well as two bit value possibilities for this rank,
- effecting a query of the tags using said hypothetical code list,
- establishing (21), following the query, a real list of codes for all the tags which have responded to the query, before passing to the following bit rank, if it exists.

**4.** Process according to claim 3, **characterized in that**, for each tag, the real list contains the bits of the codes determined during interrogations of preceding ranks, as well as an order number (ON).

**5.** Process according to claim 4, **characterized in that** the order numbers (ON) are consecutive with respect to one another.

**6.** Process according to either of the claims 4 and 5, **characterized in that** the order numbers (ON) of the tags are updated during the detection of bits of the identification codes.

**7.** Process according to any one of the claims 1 to 6, **characterized in that**, after identifying all the tags present in the electromagnetic field, it consists of verifying the detected identification codes by a query with respect to all the already listed tags.

**8.** Process according to claim 7, **characterized in that** the query with respect to all the already listed tags uses the order numbers (ON).

**9.** System for reading an array of electronic tags (E1, E2, E3, E4) in the electromagnetic field of an interrogator device, each of the tags having a distinct identification code (B3, B2, B1, B0) of N bit, the system incorporating the tag array and the interrogator device, **characterized in that** the interrogator device has transmitting/receiving means (30, 31, 32) for globally interrogating, at each bit rank, the tag array with respect to the value of their bit at said rank,
sequencing means (33) for sequencing a sequence of actions to be undertaken by the interrogator device,
means (36) for storing a real list of codes or code parts already detected, means (34) for managing, at each bit rank, an overall interrogation of the tag array, said means receiving informations relative to the value of the bits, an information relative to the presence of a collision and an information relative to a tag query stage,
means (35) for calculating codes
and each tag has transmitting/receiving means (6, 1) for responding, whilst giving the value of its bit at this rank,
sequencing means (5) for sequencing a sequence of actions which the tag has to undertake,
storage means (9) for containing the identification code,
means for calculating and managing order numbers (7) in the case of a collision and during the query stage,
an order number register (8) for storing the order number value during the query stage.

FIG. 1

EP 1 257 964 B1

LRB

INTERROGATEUR

BIP　　　　BIP

ETIQUETTES　　　　t1　　　t2

FIG. 2

|  | P1 | P2 | P3 | P4 | P5 | P6 | P7 | P8 | P9 | P10 | P11 | P12 | P13 | P14 |
|---|---|---|---|---|---|---|---|---|---|---|---|---|---|---|
| EMETTEUR | L | E | L | E | L | E | L | E | L | E | L | E | L | E |
| LECTEUR | START |  | VBIP |  | NVBIP |  | VBIP |  | VBIP |  | NVBIP |  | VBIP |  |
| TAG NO = 0 |  | BIP |  |  |  |  |  |  |  |  |  |  |  |  |
| MAJ NO | 0 | 0 | 0 | 0 | 0 | 0 | 0 | 0 | 0 | 0 | 0 | 0 | 0 | 0 |
| TAG NO = 1 |  |  |  | --- |  |  |  |  |  |  |  |  |  |  |
| MAJ NO |  |  |  |  |  |  |  |  |  |  |  |  |  |  |
| TAG NO = 2 |  |  |  |  |  | BIP |  |  |  |  |  |  |  |  |
| MAJ NO | 2 | 2 | 2 | 2 | 2 | 1 | 1 | 1 | 1 | 1 | 1 | 1 | 1 | 1 |
| TAG NO = 3 |  |  |  |  |  |  |  | BIP |  |  |  |  |  |  |
| MAJ NO | 3 | 3 | 3 | 3 | 3 | 2 | 2 | 2 | 2 | 2 | 2 | 2 | 2 | 2 |
| TAG NO = 4 |  |  |  |  |  |  |  |  |  | --- |  |  |  |  |
| MAJ NO |  |  |  |  |  |  |  |  |  |  |  |  |  |  |
| TAG NO = 5 |  |  |  |  |  |  |  |  |  |  |  |  | BIP |  |
| MAJ NO | 5 | 5 | 5 | 5 | 5 | 4 | 4 | 4 | 4 | 4 | 4 | 3 | 3 | 3 |

TEMPS

FIG. 3

EP 1 257 964 B1

| | P1 | P2 | P3 | P4 | P5 | P6 | P7 | P8 | P9 | P10 | P11 | P12 | P13 | P14 |
|---|---|---|---|---|---|---|---|---|---|---|---|---|---|---|
| EMETTEUR | L | E | L | E | L | E | L | E | L | E | L | E | L | E |
| LECTEUR | START | | SYN | | SYN | | SYN | | SYN | | SYN | | SYN | |
| TAG NO=0 | | CID | | | | | | | | | | | | |
| TAG NO=1 | | | | CID | | | | | | | | | | |
| TAG NO=2 | | | | | | CID | | | | | | | | |
| TAG NO=3 | | | | | | | | CID | | | | | | |
| TAG NO=4 | | | | | | | | | | CID | | | | |
| TAG NO=5 | | | | | | | | | | | | CID | | |

$\longrightarrow$ TEMPS

FIG. 4

FIG. 5A

FIG. 5B

FIG. 5C

EP 1 257 964 B1

FIG. 6

FIG. 7